# EUROPÄISCHE PATENTANMELDUNG

(11) **EP 1 722 238 A2**
(43) Veröffentlichungstag der Anmeldung: **15.11.2006**
(21) Anmeldenummer: 06007009.1
(22) Anmeldetag: 31.03.2006
(51) Int. Cl.: G01P 3/487, G01P 3/44

(54) **Multipol-Encoder und Verfahren zu seiner Herstellung**

(30) Priorität: 14.05.2005 DE 102005022451
(71) Anmelder: Carl Freudenberg KG, 69469 Weinheim (DE)
(72) Erfinder: Henrich, Uwe, 69502 Hemsbach (DE); Von Geisau, Markus, 68259 Mannheim (DE)

(57) **Zusammenfassung**

Multipol-Encoder zur Erfassung von Drehbewegungen an Kraftfahrzeugen und Maschinen, bestehend aus einem Stützbauteil und einem daran durch Klebung befestigten magnetischen Encoderelement aus Kunststoff mit einer Füllung aus magnetischem Pulver, wobei zwischen dem Stützbauteil (1) und dem Encoderelement (3) eine Klebeschicht (4) aus druckaktivierendem Acrylkleber angeordnet ist.

## Beschreibung

### Technisches Gebiet

Die Erfindung betrifft einen Multipol-Encoder zur Erfassung von Drehbewegungen an Kraftfahrzeugen und Maschinen, bestehend aus einem Stützbauteil und einem daran durch Klebung befestigten magnetischen Encoderelement aus Kunststoff mit einer Füllung aus magnetischem Pulver.

Multipol-Encoder werden in weiten Bereichen, beispielsweise in Kraftfahrzeugen zur Drehzahlerkennung an den Fahrzeugrädern, am Motor und am Getriebe eingesetzt. Sie weisen ein Stützbauteil auf, das beispielsweise aus Stahlblech besteht. Das Encoderelement besteht beispielsweise aus einem mit magnetischen Füllstoffen vermischten Elastomer, das in vielen Fällen an das Stützbauteil anvulkanisiert ist. Das Elastomer wird bei nachfolgenden Prozessschritten mit einer magnetischen Kodierung versehen.

Im Betrieb wird das Magnetfeld des sich drehenden Multipol-Encoders mit einem Magnetfeldsensor erfasst, in ein elektrisches Signal umgewandelt und an eine elektronische Auswerteeinheit weitergeleitet.

In vielen Anwendungsbereichen kommt der Multipol-Encoder mit unterschiedlichen Medien in Kontakt und muss daher eine ausreichende Beständigkeit gegen diese Medien aufweisen. So wird der Multipol-Encoder beim Einsatz an Kraftfahrzeugen, insbesondere an den Fahrzeugrädern, mit Wasser beaufschlagt, das im Winterbetrieb salzhaltig sein kann. Hinzu kommen Beanspruchungen durch wechselnde Temperaturen.

Für diese Beanspruchungen sind bisher Multipol-Encoder, die anvulkanisierte Encoderelemente aus Elastomer aufweisen, besser geeignet als Multipol-Encoder mit aus Thermoplast bestehenden Encoderelementen, die durch Klebung am Stützbauteil angebracht sind. Die durch Vulkanisation erzeugte Verbindung zwischen dem Encoderelement aus Elastomer und dem Stützbauteil aus Stahlblech ist absolut dicht. Es gibt daher keinerlei Spalten, in die Wasser eindringen und beim Gefrieren zu mechanischen Beschädigungen führen kann. Außerdem ist das Elastomer elastisch genug, um die unterschiedlichen Wärmeausdehnungen des Elastomers, beispielsweise Gummi, und des Stahlblechs auszugleichen. Diese Eigenschaft ist insbesondere bei schnellen Temperaturwechseln von Vorteil.

Den genannten Vorteilen der aus Elastomer bestehenden Encoderelemente stehen jedoch Nachteile gegenüber. So ist der erreichbare Füllgrad des Elastomers mit magnetischem Pulver wesentlich geringer. Thermoplaste haben bei der Formgebung deutlich bessere Fließeigenschaften als Elastomere und lassen sich daher bei noch ausreichender Verarbeitbarkeit höher mit magnetischen Pulvern füllen. Durch die geringere Viskosität der Thermoplaste bei der Formgebung können die magnetischen Partikel außerdem besser magnetisch orientiert werden. Diese Eigenschaften führen dazu, dass Encoderelemente aus Thermoplasten höhere und homogenere Magnetfelder haben als Encoderelemente aus Elastomeren.

Darüber hinaus bestehen auch Schwierigkeiten bei der Herstellung von Multipol-Encodern mit Encoderelementen aus Elastomer. Um eine möglichst hohe Signalstärke und gute Orientierung der Magnetpartikel zu erhalten, ist eine entsprechende Vorbereitung der Elastomer-Rohlinge erforderlich. Eine optimale Ausnutzung der Materialkapazität hinsichtlich Magnetfeldstärke und -homogenität erfordert den Einsatz von aufwändigen Formgebungsverfahren.

Um eine zuverlässige Absperrung des Elastomers während der Formgebung durch Vulkanisation zu gewährleisten, müssen die Stützbauteile, insbesondere Trägerbleche, mit engen Toleranzen und hoher Formpräzision bereitgestellt werden. Durch die hohen Drücke während der Formgebung besteht die Gefahr von plastischen Verformungen des Stützbauteils, wodurch sich Schwierigkeiten ergeben, die geforderten Formtoleranzen, insbesondere die Ebenheit, am fertigen Multipol-Encoder einzuhalten.

Diese Nachteile bestehen bei bekannten Multipol-Encodern nicht, bei denen die Encoderelemente, die beispielsweise auch aus Thermoplast bestehen können, mittels flüssigem Kleber am Stützbauteil angeklebt werden. Gleichwohl sind bisher in der Praxis fast ausschließlich Multipol-Encoder mit anvulkanisierten Encoderelementen aus Elastomer im Einsatz. Die Verwendung von flüssigem Kleber bei der Verbindung des Encoderelements mit dem Stützbauteil ist technisch äußerst aufwändig. Die Dosierung des Klebers muss so genau erfolgen, dass die Klebeschicht vollständig geschlossen ist und überall die gleiche Dicke hat. Dabei darf aber kein Kleber aus dem Klebespalt austreten, da sonst angrenzende Funktionsflächen, insbesondere Dichtflächen, durch austretenden Kleber verschmutzt werden könnten.

Die einander teilweise widersprechenden Anforderungen an die Klebung können nur durch eine an die jeweiligen Bauteile angepasste und hochgenaue Dosierung erreicht werden.

Da an die Oberfläche des Multipol-Encoders hohe Anforderungen bezüglich der Ebenheit und der Lagetoleranzen gestellt werden, muss das Encoderelement bis zum Aushärten des Klebers in der vorgegebenen Lage fixiert bleiben. Schwierigkeiten können auch dadurch auftreten, dass ein Schrumpfen des Klebers während der Aushärtung zu Lageabweichungen führt.

### Darstellung der Erfindung

Aufgabe der Erfindung ist es daher, einen Multipol-Encoder der eingangs genannten Gattung zu schaffen, der alle Anforderungen an die Verbindung zwischen dem Encoderelement und dem Stützbauteil in optimaler Weise erfüllt. Insbesondere muss bei der Klebung eine vollständig geschlossene Klebeschicht ausgebildet sein, damit kein Wasser in eventuell vorhandene Spalte eindringen kann und beim Gefrieren zu mechanischen Beschädigungen des Encoderelements führt. Eine Verschmutzung angrenzender Funktionsflächen, insbesondere Dichtflächen, durch Kleberaustritt beim Fügen der Bauteile muss sicher verhindert werden. Die Klebeschicht muss elastisch genug sein, um die unterschiedliche thermische Ausdehnung der zu verbindenden Teile auszugleichen, ohne dass Risse im Encoderelement auftreten, auch wenn dieses aus Thermoplast besteht. Die Klebeschicht muss eine ausreichende HydrolyseBeständigkeit aufweisen, um auch bei starkem Salzwasserangriff eine sichere Verbindung aufrecht zu erhalten. Schließlich soll eine wirtschaftliche und prozesssichere Produktion ohne spezielles Training des Produktionspersonals und ohne aufwändige Produktionsanlagen mit hohem Rüstaufwand ermöglicht werden.

Diese Aufgabe wird erfindungsgemäß dadurch gelöst, dass bei einem Multipol-Encoder der eingangs genannten Gattung zwischen dem Stützbauteil und dem Encoderelement eine Klebeschicht aus druckaktivierendem Acrylkleber angeordnet ist.

Damit wird der wesentliche Vorteil erzielt, dass eine den genannten Anforderungen entsprechende Verbindung zwischen dem Encoderelement und dem Stützbauteil ohne aufwändige Vulkanisation und daher ohne Einschränkung auf Elastomer als Material für das Encoderelement erreicht wird. Der verwendete Kleber hat eine ausreichende Elastizität, um unterschiedliche Wärmeausdehnungen des Encoderelements und des Stützbauteils auszugleichen. Sie hat eine ausreichende Temperatur- und Hydrolysebeständigkeit.

Das Encoderelement kann aus Thermoplast mit einer Füllung aus magnetischem Pulver bestehen, so dass die vorteilhaften magnetischen Eigenschaften von Thermoplast-Encodern ausgenutzt werden können. Statt dessen kann das Encoderelement aber auch aus Elastomer, Duroplast, TPE (Thermoplastisches Polyethylen) oder TPU (Thermoplastisches Polyurethan), jeweils mit einer Füllung aus magnetischem Pulver, bestehen.

Die Erfindung betrifft darüber hinaus insbesondere auch ein Verfahren zur Herstellung eines Multipol-Encoders gemäß dem Patentanspruch 1. Das Verfahren ist dadurch gekennzeichnet, dass die Klebeschicht aus druckaktivierendem Acrylkleber in den durch das Encoderelement vorgegebenen Abmessungen auf ein Trägerblatt aufgebracht wird, dass das Encoderelement ausgerichtet auf die Klebeschicht gedrückt wird, dass das Trägerblatt von der Klebeschicht abgezogen wird und dass das Encoderelement mit der Klebeschicht auf das Stützbauteil gedrückt wird. Das Trägerblatt ist vorzugsweise ein silikonisiertes Papierblatt.

Da die Klebeschicht nicht flüssig aufgebracht wird, sondern als Formteil, das bereits die genaue Form der späteren Klebeschicht aufweist, wird sichergestellt, dass die Klebeschicht dicht und überall konstant ist. Das Encoderelement wird als Formelement in einem einfachen Prozess gesondert hergestellt. Bei der Bereitstellung des Stützbauteils, beispielsweise einem Trägerblech, kann auf alle Anforderungen hinsichtlich der Abstimmung auf ein Formgebungswerkzeug, wie es beim Vulkanisieren verwendet wird, verzichtet werden. Damit wird das Stützbauteil erheblich vereinfacht.

Zum Fügen der Bauteile wird nur eine einfache Montagevorrichtung benötigt. Da der Multipol-Encoder nach dem Fügen fertig ist und sofort weiter gehandhabt werden kann, fallen alle sonst erforderlichen Prozessschritte wie Nachheizen, Stechen von Austrieben usw. weg.

### Kurzbeschreibung der Zeichnungen

Die Erfindung wird nachfolgend anhand der Zeichnung näher erläutert. Es zeigt:
- Fig. 1: einen Multipol-Encoder in einem Teilschnitt und
- Fig. 2 bis 4: aufeinander folgende Verfahrensschritte bei der Herstellung des Multipol-Encoders nach Fig. 1, jeweils in vergrößerter Darstellungsweise.

### Ausführung der Erfindung

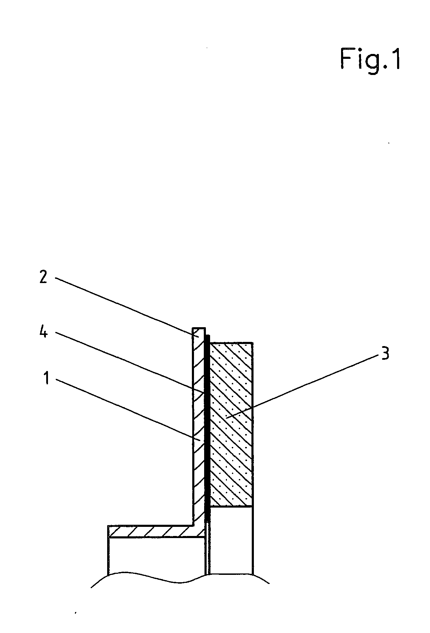

Der in Fig. 1 in einem Teilschnitt dargestellte Multipol-Encoder dient zur Erfassung von Drehbewegungen an Kraftfahrzeugen und Maschinen. Er weist als Stützbauteil 1 ein Stahlblechteil auf, das an der einen Stirnseite 2 ein magnetisches Encoderelement 3 trägt. Das Encoderelement 3 besteht bei dem dargestellten Ausführungsbeispiel aus Thermoplast mit einer Füllung aus magnetischem Pulver.

Zwischen dem Stützbauteil 1 und dem Encoderelement 3 ist eine Klebeschicht 4 aus modifiziertem, druckaktivierendem Acrylkleber angeordnet.

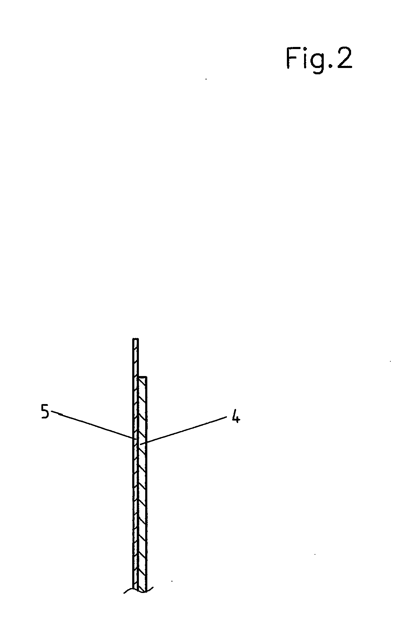

Die Verfahrensschritte zur Herstellung des Multipol-Encoders gemäß Fig. 1 sind in den Fig. 2 bis 4 dargestellt.

Ein silikonisiertes Papierblatt bildet ein Trägerblatt 5 (Fig. 2), auf das die Klebeschicht 4 als ein Formteil mit einer Dicke von 0,05 bis 0,5mm aufgebracht wird. Die Abmessungen der Klebeschicht entsprechen bereits jetzt den später erforderlichen Abmessungen der Klebeschicht 4, die durch die Abmessungen des Encoderelements 3 vorgegeben sind.

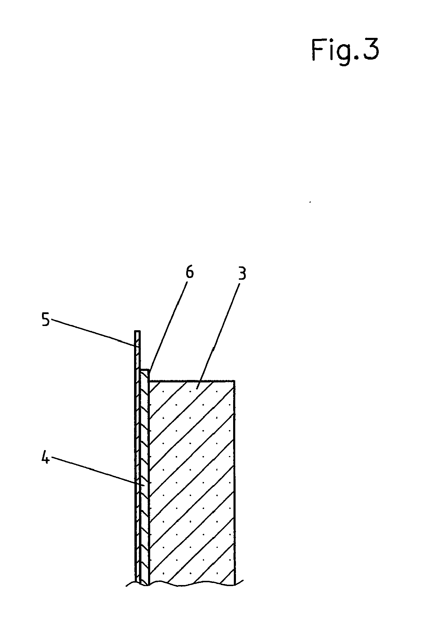

Sodann wird das Encoderelement 3 ausgerichtet auf die Klebeschicht 4 gedrückt (Fig.3). Die Ausrichtung erfolgt so, dass an allen Kanten ein definierter Überlauf 6 der Klebeschicht 4 gegenüber dem Encoderelement 3 sichergestellt ist. Die Klebeschicht 4 ist dicht; die Klebeschichtdicke ist überall konstant. Der für die Klebeschicht 4 verwendete, modifizierte, druckaktivierende Acrylkleber weist eine ausreichende Flexibilität, Temperatur- und Hydrolysebeständigkeit auf.

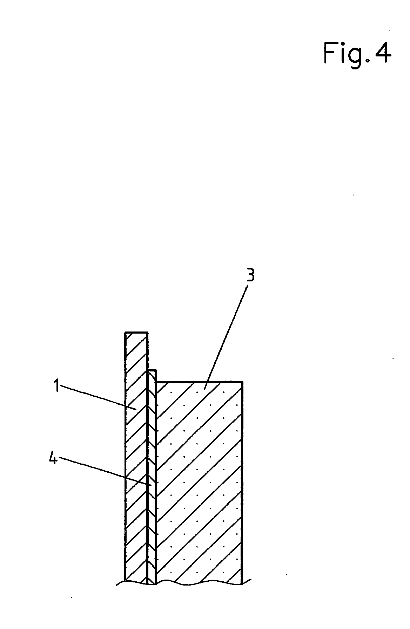

Sodann wird das Trägerblatt 5 von der Klebeschicht 4 abgezogen und das mit der Klebeschicht 4 versehene Encoderelement 3 wird ausgerichtet auf das Stützbauteil 1 gedrückt (Fig. 4). Damit ist der Fügeprozess abgeschlossen.

Bei dem beschriebenen Ausführungsbeispiel besteht das Encoderelement 3 aus Thermoplast. Stattdessen ist aber auch die Verwendung von Elastomer, Duroplast, TPE, TPU oder anderen hierfür geeigneten Materialien möglich. Das Grundmaterial des Encoderelements 3 wird mit magnetischem Pulver gefüllt, vorzugsweise Strontium-Ferrit, Barium-Ferrit oder Seltenerd-Metallen.

## Patentansprüche

1. Multipol-Encoder zur Erfassung von Drehbewegungen an Kraftfahrzeugen und Maschinen, bestehend aus einem Stützbauteil und einem daran durch Klebung befestigten magnetischen Encoderelement aus Kunststoff mit einer Füllung aus magnetischem Pulver, **dadurch gekennzeichnet, dass** zwischen dem Stützbauteil (1) und dem Encoderelement (3) eine Klebeschicht (4) aus druckaktivierendem Acrylkleber angeordnet ist.

2. Multipol-Encoder nach Anspruch 1, **dadurch gekennzeichnet, dass** das Encoderelement (3) aus Thermoplast mit einer Füllung aus magnetischem Pulver besteht.

3. Multipol-Encoder nach Anspruch 1, **dadurch gekennzeichnet, dass** das Encoderelement (3) aus Elastomer, Duroplast, TPE oder TPU, jeweils mit einer Füllung aus magnetischem Pulver besteht.

4. Verfahren zur Herstellung eines Multipol-Encoders gemäß Anspruch 1, **dadurch gekennzeichnet, dass** die Klebeschicht (4) aus druckaktivierendem Acrylkleber in den durch das Encoderelement (3) vorgegebenen Abmessungen auf ein Trägerblatt (5) aufgebracht wird, dass das Encoderelement (3) ausgerichtet auf die Klebeschicht (4) gedrückt wird, dass das Trägerblatt (5) von der Klebeschicht (4) abgezogen wird und dass das Encoderelement (3) mit der Klebeschicht (4) auf das Stützbauteil (1) gedrückt wird.

5. Verfahren nach Anspruch 4, **dadurch gekennzeichnet, dass** das Trägerblatt (5) ein silikonisiertes Papierblatt ist.
